# EUROPÄISCHE PATENTSCHRIFT

(11) **EP 2 294 658 B1**
(45) Veröffentlichungstag und Bekanntmachung des Hinweises auf die Patenterteilung: **20.08.2014**
(21) Anmeldenummer: 09772118.7
(22) Anmeldetag: 26.06.2009
(51) Int. Cl.: H01R 13/44, B60L 3/00, B60L 3/04, B60L 11/18, H01R 13/70, H01R 13/66

(54) **HOCHVOLT-STECKVERBINDUNG FÜR KRAFTFAHRZEUGE**
HIGH VOLTAGE PLUG-CONNECTOR FOR MOTOR VEHICLES
CONNEXION PAR FICHES HAUTE TENSION POUR DES VÉHICULES MOTORISÉS

(30) Priorität: 30.06.2008 DE 102008030339
(43) Veröffentlichungstag der Anmeldung: 16.03.2011
(73) Patentinhaber: LEONI Bordnetz-Systeme GmbH, 90402 Nürnberg (DE); Continental Automotive GmbH, 30165 Hannover (DE)
(72) Erfinder: ENGBRING, Jürgen, 97346 Iphofen (DE); ALBERT, Volker, 97337 Dettelbach (DE); KUSCHNAREW, Christian, 97076 Würzburg (DE); HARTMANN, Volker, 97355 Castell (DE); BUCHER, Peter, 97082 Würzburg (DE)
(74) Vertreter: FDST Patentanwälte
(86) Internationale Anmeldenummer: PCT/EP2009/004624
(87) Internationale Veröffentlichungsnummer: WO 2010/000418

(56) Entgegenhaltungen:
- DE-A1- 19 952 023
- DE-A1-102006 016 137
- DE-A1-102006 047 039
- US-A- 4 775 327
- US-A1- 2001 039 135
- US-B1- 7 084 361

## Beschreibung

Die Erfindung betrifft eine Hochvolt-Steckverbindung zur lösbaren elektrischen Verbindung von Hochvoltkomponenten, insbesondere eines elektrischen Antriebssystems eines Kraftfahrzeugs, gemäß dem Oberbegriff des Anspruchs 1. Eine derartige Hochvolt-Steckverbindung ist aus US 2001/0039135 A1 bekannt.

Nachfolgen wedern unter Hochvoltkomponenten insbesondere die Geräte und Aggregate eines elektrischen Antriebssystems eines Kraftfahrzeugs (Hybridantrieb, Hybrid-, Elektro- oder Brennstoffzellenfahrzeug) verstanden. Ein derartiges elektrisches Antriebssystem einer Antriebskonfiguration in einem Kraftfahrzeug mit mindestens einer elektrischen Maschine (Synchron- oder Asynchronmaschine) weist nachfolgend auch als Hochvoltgeräte bezeichnete Hochvoltkomponenten oder -aggregate mit Spannungen von derzeit bereits über 300V (größer 60V_{DC}, größer 25V_{AC}) auf. Hierzu gehören insbesondere auch Leistungsstellglieder, wie insbesondere Umrichter, Stromrichter und/oder Wandler, einer Steuerungseinheit oder ECU (Electronic Controller Unit).

Das sich aus den Hochvoltgeräten und einer diese speisende Hochvoltbatterie zusammensetzende Hochvoltnetz ist üblicherweise mit einem Zugangs- oder Berührungsschutz gesichert, um eine Verletzungsgefahr bei einer Berührung der die hohe Spannung führenden Hochvoltaggregate zu vermeiden. So ist beispielsweise bei abgeschaltetem Antriebssystem und noch drehender Maschine ein Berührungsschutz vor einer an den Motorklemmen der elektrischen Maschine noch verfügbaren hohen Spannung sicherzustellen.

Auch muss beim Lösen von beispielsweise aus der DE 10 2006 047 039 A1 bekannten Steckkontakten oder Kontaktverbindungen sowie beim Öffnen des Maschinengehäuses der elektrischen Maschine oder des Gerätegehäuses der die Leistungsstellglieder enthaltenden elektronischen Steuerungseinheit ein Absinken der hohen Spannung in kürzester Zeit sichergestellt werden. Aufgrund der hohen zu übertragenden Ströme und der Sicherheitsanforderungen in Bezug auf den Berührungsschutz sowie hinsichtlich vorgeschriebener Luft- und Kriechstrecken weisen derartige Hochvolt-Steckverbindungen eine besonders große Bauform auf.

Hinsichtlich des Berührungsschutzes besteht die Möglichkeit, diesen mechanisch auszuführen, so dass ein Berühren von spannungsführenden Teilen mit dem Prüffinger nicht möglich ist. So können die entsprechenden Stecker-, Buchsen- oder Kontaktöffnungen, die einen Zugriff auf die spannungsführenden Teile ermöglichen, derart klein ausgeführt werden, dass ein Prüffinger die spannungsführenden Teile nicht erreicht.

Ist ein Hochvolt-Überwachungskreis (hazardous voltage interlock loop, HVIL) vorgesehen, so kann das Sicherheitssystem derart ausgelegt sein, dass zwischen dem Öffnen des Überwachungskreises und der Möglichkeit eines Zugriffs auf spannungsführende Teile eine Zeitspanne liegt, innerhalb derer vorhandene Hochspannungsspeicher auf ein gefahrloses Niveau entladen werden. Dabei kann der Überwachungskreis durch HVIL-Signalstecker mit jeweils zwei Kontakten ausgeführt sein, die beispielsweise in den Klemmenkasten der elektrischen Maschine einsteckbar sind. Dieser Signalstecker kann mit einem Hochvolt- oder Leistungsstecker, der die hohen Leistungsströme des Hochvoltnetzes führt, fest verbunden oder derart verriegelt sein, dass zunächst der Signalstecker abgezogen sein muss, bevor der Leistungsstecker von der jeweiligen Hochvoltkomponente gelöst, d. h. abgezogen werden kann.

Alternativ könnte der Leistungsstecker die HVIL-Kontakte derart mitführen, dass diese beim Lösen der Verbindung zur Gewährleistung der gewünschten oder geforderten Eigensicherheit den Leistungskontakten zwingend voreilend geöffnet werden. Hierdurch wäre erreicht, dass zunächst die Hochspannung abgeschaltet und die Energiespeicher - mit Ausnahme vorhandener Bordnetzbatterien- entladen sind, bevor die Leistungskontakte für den Prüffinger zugänglich sind.

Für eine Ausfallsicherheit der mechanischen Steckverbindung (connector position assurance, CPA) sollte eine Primärverriegelung sicherstellen, dass beispielsweise eine Verrastung erst dann erfolgt, wenn die elektrischen Kontakte korrekt gesteckt und damit die elektrische Verbindung fehlerfrei hergestellt ist. Um ein selbsttätiges Lösen der Primärverriegelung zu verhindern, kann eine manuell betätigte Sekundärverriegelung auf diese Primärverrastung aufgesteckt (aufgeklipst, - geschnappt oder -gerastet) werden.

Der Erfindung liegt die Aufgabe zu Grunde, eine Hochvolt-Steckverbindung der eingangs genannten Art anzugeben, die auf einfache Weise einen zuverlässigen Berührungsschutz ermöglicht. Insbesondere soll im gesteckten Zustand der Hoch-volt-Steckverbindung sichergestellt sein, dass die elektrische Verbindung hergestellt ist und sich nicht unbeabsichtigt löst.

Diese Aufgabe wird erfindungsgemäß gelöst durch die Merkmale des Anspruchs 1. Vorteilhafte Ausgestaltungen, Weiterbildungen und Varianten sind Gegenstand der Unteransprüche.

Dazu umfasst die nachfolgend als Steckverbindung bezeichnete Hochvolt- oder HV-Steckverbindung zusätzlich zum Stecker und zur Steckbuchse einen Signalstecker, der den Stecker und die Steckbuchse in deren Steckposition mechanisch verrriegelt. Die Signalkontakte des Signalsteckers wirken zur Aktivierung der Hochspannung als sogenannte HVIL-Kontakte mit entsprechenden Gegenkontakten zusammen. Die mechanische Verbindung zwischen dem Stecker und der Steckbuchse umfasst eine Vorrastposition, in der der Signalstecker freigegeben und die elektrische Kontaktierung zwischen den Leistungskontakten und den Gegenkontakten lösbar ist. Dies bedeutet, dass die elektrische Kontaktierung nur dann geöffnet werden kann, wenn die HV-Steckverbindung diese Vorrastposition eingenommen hat. In diese Vorrastposition ist die HV-Steckverbindung nur dann überführbar, wenn der Signalstecker aus der Verriegelungsposition in die Freigabeposition verbracht worden ist.

Die zwischen dem Stecker und der Steckbuchse hergestellte mechanische Verriegelung, die ein vollständiges Öffnen der HV-Steckverbindung auch in der Vorrastposition verhindert, ist nur dann entriegelt, wenn sowohl die elektrische Kontaktierung geöffnet als auch der Signalstecker aus der Vorrastposition in eine Freigabeposition geführt ist. In dieser Freigabeposition, die vorzugsweise eine gesonderte Steckposition für einen nach Art eines Schlüssels ausgeführten oder wirksamen Signalstecker ausgeführt ist, deckt dieser Signalstecker die Leistungskontakte berührsicher ab. Hierzu sind die Leistungskontakte geeigneterweise als Male-Kontakte und somit die Gegenkontakt als Female-Kontakte ausgeführt.

Die Erfindung geht von der Überlegung aus, dass der Berührungsschutz nicht durch entsprechend kleine Stecker-, Buchsen- oder Kontaktöffnungen sichergestellt werden muss, wenn gewährleistet ist, dass der Leistungsstecker erst dann abgezogen werden kann, wenn alle spannungsführenden Kontakte mechanisch abgedeckt sind und dabei der Berührungsschutz automatisch hergestellt wird. Hierfür kann die Bereitstellung zusätzlicher Funktionsteile entfallen, wenn diese Aufgabe vom HVIL-Stecker als zusätzliche Funktion übernommen wird. Dieser erfüllt dann die Doppelfunktion des Berührungsschutzes und der Ausfallsicherheit der mechanischen Steckverbindung (CPA).

In zweckmäßiger Ausgestaltung weist die Steckverbindung, d. h. insbesondere der Stecker oder die Steckbuchse, ein Gehäuse (Steckgehäuse) mit vorzugsweise zwei Gehäusekammern auf, in die der Signalstecker bzw. Schlüssel bei Herstellung der Vorrastposition in dessen Steckposition einerseits und in der Freigabeposition andererseits eingesetzt werden kann. Dabei sind bevorzugt die Leistungskontakte von einem Steckgehäuse mit mindestens einer Kontaktieröffnung umgeben, die in der Freigabeposition vom Signalstecker berührsicher verschlossen ist.

Die mit der Erfindung erzielten Vorteile bestehen insbesondere darin, dass durch die Bereitstellung einer Vorrastposition für die beteiligten Leistungsstecker einer Hochvolt-Steckverbindung einerseits und die Verwendung eines Signalsteckers nach Art eines Schlüssels zur Entriegelung, Freigabe der Kontaktöffnung und Abdeckung nicht berührsicher verschlossener Leistungskontakte andererseits die Funktionalitäten des Berührungsschutzes, der Ausfallsicherheit der mechanischen Steckverbindung (CPA), die HVIL-Sicherheitsfunktionalität und die Schlüsselfunktion zur Ver- und Entriegelung der Steckverbindung in logischer und zwingend vorgegebener Reihenfolge kombiniert sind.

Nachfolgend wird ein Ausführungsbeispiel der Erfindung anhand einer Zeichnung näher erläutert. Darin zeigen:
- Fig. 1 bis 3: schematisch eine Draufsicht auf eine Hochvolt-Steckverbindung mit einem Signalstecker als Ver- und Entriegelungsschlüssel in Steckposition, in Vorrastposition der Steckverbindung bzw. in vollständig getrennter Position der Steckverbindung,
- Fig. 4 und 5: die Steckverbindung gemäß Fig. 1 in einer Vorderansicht auf das Steckgesicht bzw. in einer Seitenansicht,
- Fig. 6 und 7: die Steckverbindung gemäß Fig. 2 in einer Vorder- bzw. Seitenansicht, und
- Fig. 8 und 9: die Steckverbindung gemäß Fig. 3 in Vorder- bzw. Seitenansicht mit abgedeckten Male-Kontakten.

Einander entsprechende Teile sind in allen Figuren mit den gleichen Bezugszeichen versehen.

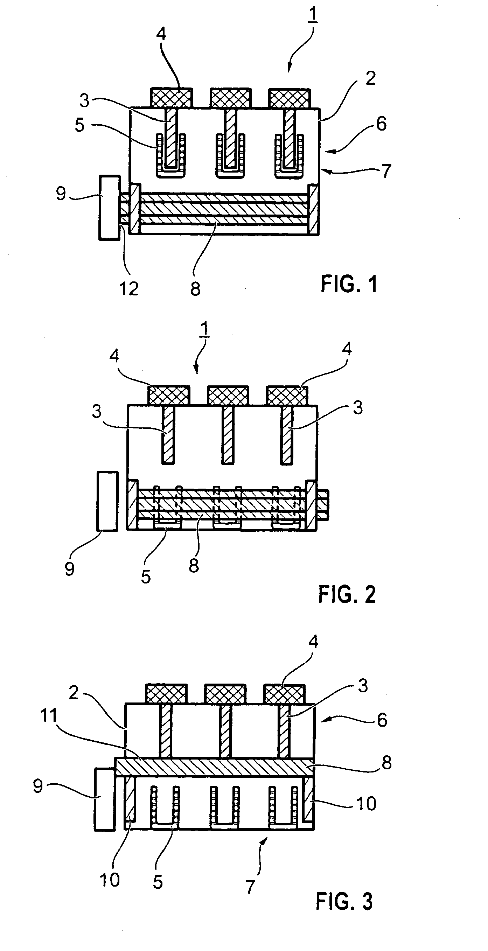

Die in Fig. 1 veranschaulichte Hochvolt- oder HV-Steckverbindung 1 umfasst ein Gehäuse (Steckgehäuse) 2, in dem im Ausführungsbeispiel drei Hochvolt- oder Leistungskontakte 3 einliegen. Die Kontakte 3 sind mit Leitern oder Leiteradern 4 eines nicht näher bezeichneten Versorgungs- oder Leistungskabels verbunden. Das Leistungskabel ist beispielsweise in ein Hochspannungsnetz eines Fahrzeugs mit elektrischem Antriebssystem integriert.

In der in Fig. 1 gezeigten Steckverbindung sind mit den Kontakten 3 in der Steckposition korrespondierende Gegenkontakte 5 elektrisch leitend verbunden. Diese Gegenkontakte 5 sind im Ausführungsbeispiel als Female-Kontakte ausgeführt, während die Kontakte 3 als Male-Kontakte ausgeführt sind. Demnach sind diese im Ausführungsbeispiel einem Stecker (HV-Stecker) 6 der Steckverbindung 1 zugeordnet, während die Female-Kontakte 5 einer Steckbuchse 7 der Steckverbindung 1 zugeordnet sind.

Die Steckverbindung 1 weist zudem einen nachfolgend als HVIL-Stecker bezeichneten Signalstecker 8 auf. Dieser wirkt in der vollständig geschlossenen und elektrisch kontaktierten Steckverbindung in nicht näher dargestellter Art und Weise mit geräte- oder komponentenseitigen Signalkontakten 9 zusammen. In der in Fig. 1 dargestellten Steckposition ist der HVIL-Stecker 8 in Verriegelungsposition. In der Veriegelungsposition sind der Stecker 6 und die Steckbuchse 7 der Steckverbindung 1 gegen ein mechanisches Öffnen blockiert und damit gesichert.

In der in Fig. 2 dargestellten Freigabeposition des HVIL-Steckers 8 kann die elektrische Kontaktierung zwischen den Male-Kontakten 3 und den Female-Kontakten 5 geöffnet werden. In der Freigabeposition des HVIL-Steckers 8 können jedoch der Stecker 6 und die Steckbuchse 7 der Steckverbindung 1 lediglich in eine mechanische Vorrastposition verbracht werden, in der die Kontakte 3, 5 bzw. vorhandene Kontaktöffnungen zu den Kontakten 3,5 berührsicher abgedeckt oder verschlossen sind.

Fig. 3 zeigt die Steckverbindung 1 mit in eine Abdeckposition verbrachtem HVIL-Stecker 8. Hierzu ist dieser nach Art eines Ver- und Entriegelungsschlüssels aus der in Fig. 2 dargestellten Freigabeposition herausgenommen und in die Abdeckposition eingesteckt. Dabei sind eine durch die Gehäuseelemente 10 veranschaulichte erste Gehäusekammer für die Freigabeposition und eine zweite Gehäusekammer 11 für die Abdeckposition vorgesehen.

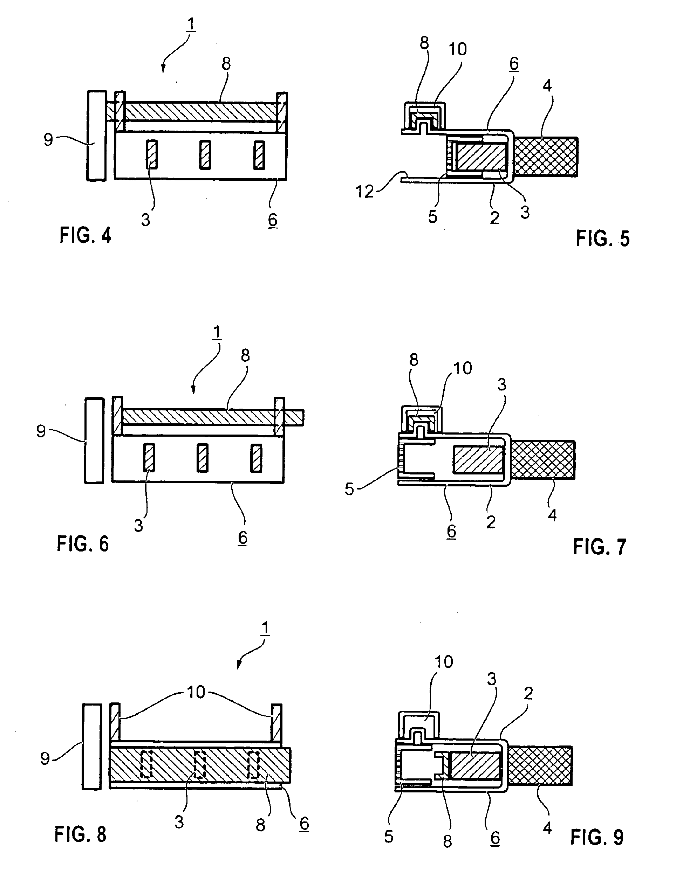

Die Fig. 4, 6 und 8 zeigen mit Blick auf die Stirnseiten der Male-Kontakte 3 - und damit auf das Steckgesicht des Steckers 6 - den HVIL-Stecker 8 in dessen Verriegelungsposition (Fig. 4), in dessen Freigabeposition (Fig. 6) bzw. in dessen Abdeckposition (Fig. 8). Die Fig. 5, 7 und 9 zeigen die Steckverbindung 1 ebenfalls in diesen Positionen des HVIL- oder Signalsteckers 8 sowie die zugehörigen mechanischen Fügepositionen und elektrischen Kontaktierungspositionen des Steckers 6 und der Steckbuchse 7 bzw. der Male- und Female-Kontakte 3, 5.

Wie in den Fig. 5, 7 und 9 vergleichsweise deutlich ersichtlich ist, weist das Steckgehäuse 2 eine in einen Fügeraum mündende Steck- oder Fügeöffnung (Kontaktieröffnung) 12 auf, die gemäß Fig. 9 berührsicher abgeschlossen ist, bevor der Female-Kontakt 5 zusammen mit der Steckbuchse 7 diese Fügeöffnung 12 frei gibt und somit für einen Prüffinger zugänglich macht.

Ausgehend von der in den Fig. 3, 8 und 9 dargestellten Ausgangssituation, bei der die Steckverbindung 1 elektrisch getrennt ist, sind die Leistungskontakte 3 mittels des als Schlüssel wirksamen HVIL-Steckers 8 berührgeschützt. In diesem Zustand der Steckverbindung 1 kann der HV-Stecker 6 lediglich in die in den Fig. 2, 6 und 7 dargestellte Vorrastposition verbracht werden. In dieser Vorrastposition ist der Signalstecker 8 frei und kann aus der praktisch als Schloss wirksamen Gehäuse- oder Verriegelungskammer 10 entfernt werden. Nur in diesem Zustand kann der HV-Stecker 6 aus der Vorrastposition gemäß Fig. 2 in die Steckposition gemäß Fig. 1 gebracht werden. Dabei gibt der HV-Stecker 6 die Stecköffnung 12 (Fig. 1 und 4) zum Fügen des Signalsteckers 8 in die Verriegelungsposition zur Herstellung des CPA-Schutzes frei.

Für eine zuverlässige Gefahrenvermeidung ist sichergestellt, dass der HV-Stecker 6 nach dem Ziehen des Schlüssels oder Signalsteckers 8 nicht mehr aus dessen Vorratsposition entfernt werden kann. Der Signalstecker 8 kann nun in die in den Fig. 1, 4 und 5 veranschaulichte CPA-Position gesteckt werden und verriegelt somit zeitgleich den HV-Stecker 6. Der Signalstecker 8 beinhaltet dabei die CPA-Funktion und die HVIL-Funktion.

Für den Entriegelungsvorgang wird wiederum zunächst der HVIL-Stecker 8 gelöst und dadurch der Entladevorgang eingeleitet, woraufhin die CPA-Funktionalität nunmehr frei ist und gelöst werden kann. Nach dem Lösen der CPA-Funktionalität kann der HV-Stecker 6 der Steckverbindung 1 in die Vorrastposition (Fig. 2, 6 und 7) gebracht, jedoch nicht vollständig abgezogen werden. Um den HV-Stecker 6 vollständig ziehen zu können, muss der Signalstecker 8 an einer anderen Stelle in ein Schloss eingeführt werden, was im Ausführungsbeispiel durch die entsprechende Gehäusekammer 11 veranschaulicht ist. In dieser Position deckt der Signalstecker 8 in seiner Funktionalität als Schlüssel die HV-Kontakte 3 berührsicher ab. In dieser Abdeckposition des Signalsteckers 8 ist die Vorrastposition des HV-Steckers 6 vollständig entriegelt, so dass dieser nun vollständig abgezogen werden kann. Anstelle der Abdeckung der Male-Kontakte 3 kann auch die Abdeckung der Female-Kontakte 5 realisiert sein.

Der beschriebene Berührungsschutz kann auch als Transportsicherung verwendet werden, da die Verriegelung so lange bestehen bleibt, bis der HV-Stecker 6 erneut in die Vorrastposition (Fig. 2,6 und 7) eingebracht ist.

### Bezugszeichenliste

- 1: Hochvolt-/Steckverbindung
- 2: Steck-/Gehäuse
- 3: Male-/Leistungskontakt
- 4: Leiter/-ader
- 5: Female-/Gegenkontakt
- 6: Stecker
- 7: Steckbuchse
- 8: Signal-/HVIL-Stecker
- 9: Signalkontakt
- 10: erste Gehäusekammer
- 11: zweite Gehäusekammer
- 12: Steck-/Fügeöffnung

## Patentansprüche

1. Hochvolt-Steckverbindung (1) zur lösbaren elektrischen Verbindung von Hochvoltkomponenten, insbesondere eines elektrischen Antriebssystems eines Kraftfahrzeugs, mit einem Stecker (6) mit elektrischen Leistungskontakten (3) und mit einer Steckbuchse (7) mit zu den Leistungskontakten (3) korrespondierenden Gegenkontakten (5) sowie mit Kontaktmitteln zur Aktivierung der Hochspannung in der Steckposition des Stecker (6) und der Steckbuchse (7),
**dadurch gekennzeichnet,**
- **dass** als Kontaktmittel ein mit Signalkontakten (9) zur Aktivierung der Hochspannung zusammenwirkender Signalstecker (8) vorgesehen ist, der den Stecker (6) und die Steckbuchse (7) in deren Steckposition mechanisch verrriegelt,
- **dass** die mechanische Verbindung zwischen dem Stecker (6) und der Steckbuchse (7) eine Vorrastposition aufweist, in der der Signalstecker (8) in eine Freigabeposition geführt und die elektrische Kontaktierung zwischen den Leistungskontakten (3) und den Gegenkontakten (5) lösbar ist, und
- **dass** die mechanische Verriegelung zwischen dem Stecker (6) und der Steckbuchse (7) nur dann entriegelt ist, wenn die elektrische Kontaktierung zwischen den Leistungskontakten (3) und den Gegenkontakten (5) geöffnet und der Signalstecker (8) in eine Abdeckposition geführt ist, in der der Signalstecker (8) die Leistungskontakte (3) abdeckt.

2. Hochvolt-Steckverbindung (1) nach Anspruch 1,
**dadurch gekennzeichnet,**
**dass** der Signalstecker (8) ein HVIL-Stecker ist.

3. Hochvolt-Steckverbindung (1) nach Anspruch 1 oder 2,
**dadurch gekennzeichnet,**
**dass** der Stecker (6) oder die Steckbuchse (7) ein Steckgehäuse (2) mit mindestens einer Gehäusekammer (10,11) zur Aufnahme des Signalsteckers (8) in die Freigabeposition und/oder in die Abdeckposition aufweist.

4. Hochvolt-Steckverbindung (1) nach einem der Ansprüche 1 bis 3,
**dadurch gekennzeichnet,**
**dass** die Leistungskontakte (3) als Male-Kontakte und die Gegenkontakte (5) als Female-Kontakte ausgeführt sind.

5. Hochvolt-Steckverbindung (1) nach einem der Ansprüche 1 bis 4,
**dadurch gekennzeichnet,**
**dass** die Leistungskontakte (3) von einem Steckgehäuse (2) mit mindestens einer Fügeöffnung (12) umgeben sind, die in der Abdeckposition vom Signalstecker (8) berührsicher verschlossen ist.

## Claims

1. High-voltage plug connection (1) for the releasable electrical connection of high-voltage components, in particular of an electrical drive system of a motor vehicle, having a plug (6) with electrical power contacts (3) and having a socket (7) with counter contacts (5) corresponding to the power contacts (3), as well as having contact means for the activation of the high voltage in the plugged-in position of the plug (6) and the socket (7),
**characterised in that**,
- a signal plug (8) interacting with signal contacts (9) for the activation of the high voltage is provided, which mechanically locks the plug (6) and the socket (7) in their plugged-in position,
- the mechanical connection between the plug (6) and the socket (7) has a pre-latching position in which the signal plug (8) is guided into a release position and the electrical contact between the power contacts and the counter contacts (5) can be released, and
- the mechanical lock between the plug (6) and the socket (7) is then only unlocked when the electrical contact between the power contacts (3) and the counter contacts (5) is opened and the signal plug (8) is guided into a covering position in which the signal plug (8) covers the power contacts (3).

2. High-voltage plug connection (1) according to claim 1,
**characterised in that**,
the signal plug (8) is an HVIL plug.

3. High-voltage plug connection (1) according to claim 1 or 2,
**characterised in that**,
the plug (6) or the socket (7) has a plug housing (2) having at least one housing chamber (10, 11) for receiving the signal plug (8) into the release position and/or in to the covering position.

4. High-voltage plug connection (1) according to one of claims 1 to 3,
**characterised in that**,
the power contacts (3) are designed as male contacts and the counter contacts (5) are designed as female contacts.

5. High-voltage plug connection (1) according to one of claims 1 to 4,
**characterised in that**,
the power contacts (3) are enclosed by a plug housing (2) with at least one joint opening (12), which is sealed in the covering position of the signal plug (8) so as to ensure safe touching.

## Revendications

1. Liaison de connexion haute-tension par connecteur à emmanchement (1) pour assurer une liaison électrique, susceptible d'être interrompue, de composants haute-tension, notamment d'un système d'entraînement électrique d'un véhicule automobile, la liaison comprenant une fiche de connexion (6) avec des contacts électriques de puissance (3) et une douille de connexion (7) avec des contacts conjugués (5) correspondant aux contacts de puissance (3), ainsi que des moyens de contact pour activer la haute-tension dans la position emmanchée de la fiche de connexion (6) et de la douille de connexion (7),
**caractérisée**
- **en ce que** concernant lesdits moyens de contact, il est prévu une fiche de signal (8), qui interagit avec des contacts de signal (9) pour activer la haute-tension, et qui verrouille mécaniquement la fiche de connexion (6) et la douille de connexion (7) dans leur position emmanchée,
- **en ce que** la liaison mécanique entre la fiche de connexion (6) et la douille de connexion (7) présente une position de pré-encliquetage, dans laquelle la fiche de signal (8) est transférée dans une position de libération et le contact électrique entre les contacts de puissance (3) et les contacts conjugués (5) peut être interrompu, et
- **en ce que** le verrouillage mécanique entre la fiche de connexion (6) et la douille de connexion (7) n'est déverrouillé que lorsque le contact électrique entre les contacts de puissance (3) et les contacts conjugués (5) est ouvert, et que la fiche de signal (8) est transférée dans une position de recouvrement dans laquelle la fiche de signal (8) recouvre les contacts de puissance (3).

2. Liaison de connexion haute-tension par connecteur à emmanchement (1) selon la revendication 1,
**caractérisée**
**en ce que** la fiche de signal (8) est une fiche de type fiche HVIL.

3. Liaison de connexion haute-tension par connecteur à emmanchement (1) selon la revendication 1 ou la revendication 2,
**caractérisée**
**en ce que** la fiche de connexion (6) ou la douille de connexion (7) présente un boitier de connexion (2) avec au moins un compartiment de boitier (10, 11) destiné à accueillir la fiche de signal (8) dans la position de libération et/ou dans la position de recouvrement.

4. Liaison de connexion haute-tension par connecteur à emmanchement (1) selon l'une des revendications 1 à 3,
**caractérisée**
**en ce que** les contacts de puissance (3) sont réalisés sous forme de contacts mâles, et les contacts conjugués (5) sous forme de contacts femelles.

5. Liaison de connexion haute-tension par connecteur à emmanchement (1) selon l'une des revendications 1 à 4,
**caractérisée**
**en ce que** les contacts de puissance (3) sont entourés par un boitier de connecteur (2) comportant au moins une ouverture d'assemblage (12), qui, dans la position de recouvrement de la fiche de signal (8), est fermée de manière sécurisée à l'encontre d'un contact par toucher.
